# EUROPEAN PATENT SPECIFICATION

(11) **EP 2 894 755 B1**
(45) Date of publication and mention of the grant of the patent: **27.03.2019**
(21) Application number: 13833654.0
(22) Date of filing: 22.08.2013
(51) Int. Cl.: H02J 7/00, H02J 50/10

(54) **CONTACTLESS CHARGING SYSTEM**
KONTAKTLOSES AUFLADESYSTEM
SYSTÈME DE CHARGE SANS CONTACT

(30) Priority: 03.09.2012 JP 2012192959
(43) Date of publication of application: 15.07.2015
(73) Proprietor: Maxell Holdings, Ltd., Kyoto 618-8525 (JP)
(72) Inventor: HINO, Yoshiharu, Ibaraki-shi, Osaka 567-8567 (JP); MIYAKE, Akira, Ibaraki-shi, Osaka 567-8567 (JP)
(74) Representative: Diehl & Partner GbR
(86) International application number: PCT/JP2013/072429
(87) International publication number: WO 2014/034523

(56) References cited:
- EP-A2- 2 244 351
- WO-A1-2012/014483
- WO-A1-2012/029829
- JP-A- H05 345 035
- JP-A- H05 345 035
- JP-A- H06 339 232
- JP-A- H08 214 413
- JP-A- H10 201 117
- JP-A- H10 201 117
- JP-A- 2003 204 637
- JP-A- 2008 206 232
- JP-A- 2011 171 871

## Description

### Technical Field

The present invention relates to a contactless charging system that transmits electric power in a contactless manner through electromagnetic induction to charge a secondary battery built in a power receiving side, and more particularly to a function of switching between the state during charging of the secondary battery and the state during discharging where electric power is supplied from the secondary battery.

### Background Art

In recent years, a contactless power transmission system that feeds power in a contactless manner (wirelessly) has been increasingly used for small electrical devices such as cellular phones. With use of a charging system employing contactless power transmission for charging a secondary battery built in a small electrical device, cumbersome charging operation is widely improved. Also, for a small set device, such as a hearing aid, operating with a button lithium ion battery, which often has to be waterproof considering its use environment, contactless charging of the battery is essential from the standpoint of the form.

A contactless charging system is comprised of a power transmission module incorporated in a charger, for example, and a power receiving module incorporated in a set device. Electric power is transmitted from the power transmission module to the power receiving module through electromagnetic induction between a power transmission coil of the power transmission module and a power receiving coil of the power receiving module. In the power receiving module, high-frequency power received by the power receiving coil is converted to DC power, and voltage-converted to a charging voltage, to perform charging of a secondary battery.

In a small set device as that described above, which uses a button secondary battery small in capacity, it is necessary to make effective use of stored energy at the time of contactless charging. Therefore, during charging operation for the secondary battery, it is desirable to control the set device into a power shutdown state where normal power supply to the set device by discharging of the secondary battery is stopped. Switching to a power supply state where normal power supply to the set device is permitted may be made possible after attainment of full charge is detected.

It is also desirable to perform control not to switch the state to the power supply state in a situation where the power receiving module is loaded in a predetermined power receiving position of the power transmission module even though attainment of full charge is detected. This is because it is often unnecessary to assume a situation where the set device is put to normal use while being loaded on the power transmission module. Therefore, it is desirable to control switching between the power shutdown state and the power supply state according to whether or not the power receiving module is loaded on the power transmission module.

It is however difficult from the structural standpoint to provide a function of switching the operation manually in a small set device such as a hearing aid, and also this makes the handling cumbersome. Therefore, a configuration is necessary where the loaded state of the power receiving module is made detectable and switching between the power shutdown state and the power supply state is performed according to the detected result.

Patent Document 1 discloses a configuration, as an example of a contactless charging system, where full charge of a battery in a load section as the power receiving side is detected and the operation mode is switched according to the detection result. More specifically, full charge is detected based on a voltage change appearing in a primary coil along with a load change in a secondary coil of the load section that occurs due to full charge. In response to this detection, control is performed to stop power transmission from a power source section as the primary side to the load section.

Also, in contactless charging systems described in Patent Documents 2 to 4, a configuration is disclosed where normal power transmission for charging from the power transmission side is stopped once full charge is attained, and an operation for checking whether or not restart of normal power transmission is necessary is repeated intermittently.

### Prior Art Documents

### Patent Document

[Patent Document 1] JP H06-339232A
[Patent Document 2] JP 2008-178195A
[Patent Document 3] JP 2008-236968A
[Patent Document 4] JP 2010-35417A Further prior art can be found in JP H10 201117 A, WO2012/029829 A1, EP 2 244 351 A2, JP 2003 204637 A, JP H05 345035 A and WO 2012/014483 A1.

### Disclosure of Invention

### Problem to be Solved by the Invention

Patent Documents 1 to 4 merely disclose a configuration of controlling the power transmission operation on the power transmission side in response to detection of full charge, and include no disclosure on a configuration of controlling an operation related to a secondary battery on the power receiving side. That is, the controls disclosed in Patent Documents 1 to 4 do not involve control of stopping power supply to a small device during charging of the secondary battery and permitting switching to the power supply state where normal power supply is performed in response to detection of full charge.

It is needless to mention that none of Patent Documents 1 to 4 describes control of switching between the power shutdown state and the power supply state according to whether or not the power receiving module is loaded in a predetermined power receiving position of the power transmission module.

In view of the above, an objective of the present invention is providing a contactless charging system where switching between the power shutdown state where power supply by discharging of a secondary battery is stopped and the power supply state where power supply is permitted is controlled according to the detection result on whether or not a power receiving module is loaded on a power transmitting module. The invention is defined by the contactless charging system according to claim 1.

### Means for Solving Problem

The contactless charging system according to the present invention includes, as basic components: a power transmission module having a power transmission coil for transmitting high-frequency power; and a power receiving module having a power receiving coil that receives the high-frequency power through electromagnetic induction and a secondary battery charged with DC power obtained by rectifying the received power.

To solve the above-described problem, in the contactless charging system of the first configuration according to the invention, the power receiving module includes a switching control section that performs switching between a power shutdown state where power supply by discharging of the secondary battery is stopped and a power supply state where power supply by discharging of the secondary battery is permitted, and a carrier detection circuit that generates a SW signal the ON/OFF of which is switched according to the presence or absence of a power receiving carrier of the high-frequency power in the power receiving coil, and the switching control section controls the switching to the power shutdown state when the SW signal indicates the presence of the power receiving carrier, and to the power supply state when the SW signal indicates the absence of the power receiving carrier.

In the contactless charging system of the second configuration according to the invention, the power receiving module includes a switching control section that performs switching between a power shutdown state where power supply by discharging of the secondary battery is stopped and a power supply state where power supply by discharging of the secondary battery is permitted, and a loading detection section that detects a state where the power receiving module is loaded in a predetermined power receiving position with respect to the power transmission module and outputs a loading detection signal, and the switching control section controls the switching to the power shutdown state when the loading detection signal is being output, and switching to the power supply state when the loading detection signal is not output.

### Effects of the Invention

According to the contactless charging system of the first configuration described above, the loaded state of the power receiving module on the power transmission module is determined according to the presence or absence of detection of the power receiving carrier by the carrier detection circuit, to control switching between the power shutdown state and the power supply state by the switching control section. With this control, an occurrence of permitting discharge even though the set device is not put to normal use is avoided, and this is effective for preventing waste of stored energy of a small-capacity secondary battery.

According to the contactless charging system of the second configuration, switching between the power shutdown state and the power supply state by the switching control section is controlled according to the loaded state of the power receiving module on the power transmission module based on the loading detection signal from the loading detection section. With this control, an effect similar to that in the first configuration is obtained.

### Brief Description of Drawings

FIG. 1 is a block diagram showing a contactless charging system of Embodiment 1.
FIG. 2 is a waveform chart for explaining the operation of the contactless charging system of Embodiment 1.
FIG. 3 is a block diagram showing a contactless charging system of Embodiment 2.
FIG. 4 is a waveform chart for explaining the operation of the contactless charging system of Embodiment 2.
FIG. 5 is a block diagram showing a contactless charging system of Embodiment 3.
FIG. 6 is a waveform chart for explaining the operation of the contactless charging system of Embodiment 3.

### Description of the Invention

The contactless charging system according to the present invention can take the following forms based on the above-described configurations.

That is, in the contactless charging system of the first configuration, the power receiving module may include a charged state detection section that detects whether or not the secondary battery is in a fully charged state and outputs a charge detection signal and a transmitter section that transmits data including the charge detection signal, the power transmission module may include a receiver section that receives transmitted data from the transmitter section of the power receiving module and a power transmission control circuit that switches the level of a power transmission carrier of the high-frequency power supplied to the power transmission coil between a normal power transmission level and a reduced level lower than the normal power transmission level, and the power transmission control circuit may control the level of the power transmission carrier to the normal power transmission level when the charge detection signal received by the receiver section indicates a state that is not the fully charged state, and to the reduced level when it indicates the fully charged state.

In the contactless charging system of the second configuration, the power receiving module may include a charged state detection section that detects whether or not the secondary battery is in a fully charged state and outputs a charge detection signal and a transmitter section that transmits data including the charge detection signal, the power transmission module may include a receiver section that receives transmitted data from the transmitter section of the power receiving module and a power transmission control circuit that switches the level of a power transmission carrier of the high-frequency power supplied to the power transmission coil between a normal power transmission level and a power transmission stop level, and the power transmission control circuit may control the level of the power transmission carrier to the normal power transmission level when the charge detection signal received by the receiver section indicates a state that is not the fully charged state, and to the power transmission stop level when it indicates the fully charged state.

The loading detection section may be comprised of a proximity switch, the power transmission module may include a switching action section placed next to the power receiving position of the power receiving module, and the proximity switch may be switched by the switching action section in a state where the power receiving module is placed in the power receiving position to generate the loading detection signal.

Embodiments of the present invention will be described hereinafter with reference to the accompanying drawings.

### <Embodiment 1>

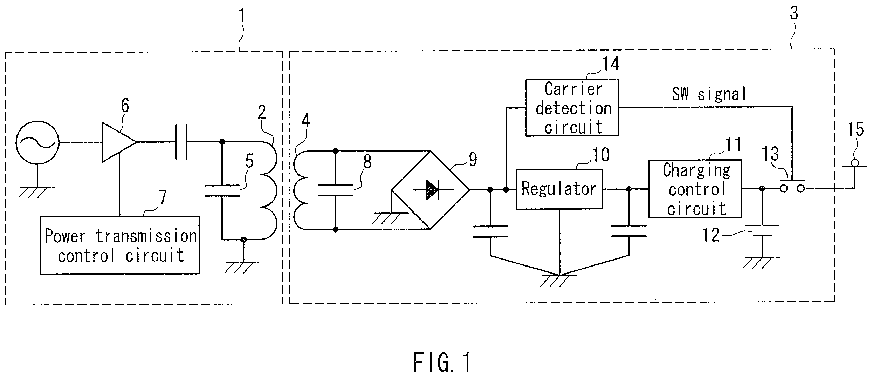

A contactless charging system of Embodiment 1 will be described with reference to the block diagram shown in FIG. 1. This system is configured to transmit electric power between a power transmission coil 2 of a power transmission module 1 and a power receiving coil 4 of a power receiving module 3 through electromagnetic induction. The power transmission module 1 is incorporated in a charger, and the power receiving module 3 is incorporated in a set device such as a cellular phone and a hearing assist.

High-frequency power is supplied from a coil driver 6 to a resonant circuit constituted by the power transmission coil 2 and a resonant capacitor 5, to perform power transmission from the power transmission coil 2. The operation of the coil driver 6 is controlled by a power transmission control circuit 7. In the power receiving module 3, the high-frequency power is received by a resonant circuit constituted by a parallel circuit of the power receiving coil 4 and a resonant capacitor 8. An AC voltage at both ends of the resonant capacitor 8 is supplied to a rectifying circuit 9 to be converted to a DC voltage.

The output power of the rectifying circuit 9 is regulated to a fixed voltage by a regulator 10, and then supplied to a secondary battery 12 via control by a charging control circuit 11. The charging control circuit 11 is configured to have a function as a protection circuit for the secondary battery 12 although illustration is omitted, in addition to the function of charging control for the secondary battery 12. Discharged power from the secondary battery 12 is supplied to a power source section 15 of the set device incorporating the power receiving module 3 via an output switch 13. Therefore, when the output switch 13 is OFF, the set device is put in the power shutdown state where power supply by discharging of the secondary battery 12 is stopped. When the output switch 13 is ON, it is put in the power supply state where power supply by discharging of the secondary battery 12 is permitted.

A carrier detection circuit 14 is also connected to the output side of the rectifying circuit 9. The carrier detection circuit 14 detects the presence or absence of a carrier of high-frequency power in the power receiving coil 4, and generates a SW signal the ON/OFF of which is switched according to the presence or absence of the power receiving carrier. The ON/OFF of the output switch 13 is controlled with the SW signal.

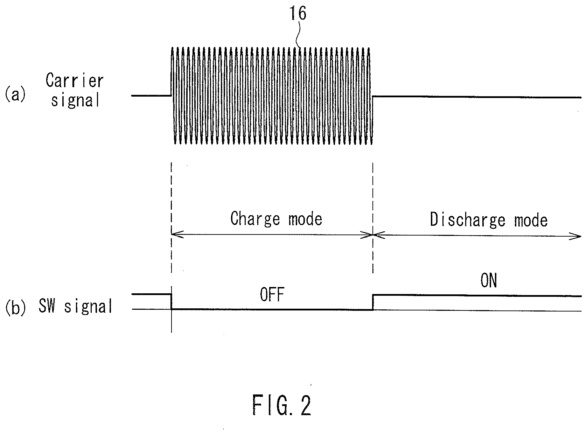

The operation of the carrier detection circuit 14 will be described with reference to FIG. 2. FIG. 2 shows correspondences among the waveform of the carrier signal (a) of high-frequency power in the power receiving coil 4, the waveform of the SW signal (b) output by the carrier detection circuit 14, and the time periods of a charge mode and a discharge mode. The time period when a carrier waveform 16 is present in the carrier signal (a) corresponds to the charge mode, and the time period when the carrier waveform 16 is absent corresponds to the discharge mode. The SW signal (b) is switched according to the waveform of the carrier signal (a): it has a waveform of being OFF during the time period when the carrier waveform 16 is present (charge mode) and ON during the time period when the carrier waveform 16 is absent (discharge mode).

The carrier detection circuit 14 constitutes the switching control section together with the output switch 13 by controlling the output switch 13 with the ON/OFF of the SW signal. More specifically, the output switch 13 is controlled to be OFF with the SW signal being OFF, and while the power shutdown state is maintained, the secondary battery 12 is charged (charge mode). By contrast, the output switch 13 is turned ON with the SW signal being ON, to be controlled to the power supply state (discharge mode).

According to the configuration of this embodiment, in a situation where a carrier is being sent to the power receiving coil 4, it is determined that the power receiving module 3 is loaded on the power transmission module 1, i.e., the charger, so that the state is controlled to the power shutdown state. By contrast, when no carrier can be received in the power receiving coil 4, it is determined that the power receiving module 3 has been removed from the charger, so that the state is controlled to the power supply state.

Accordingly, control according to the detection result on whether or not the power receiving module 3 is loaded in the power receiving position is virtually performed. With this control, since switching to the power supply state is prohibited in a situation where the power receiving module 3 is loaded in the power receiving position of the power transmission module 1, an occurrence of permitting discharge even though the set device is not put to normal use is avoided. This function is effective for preventing waste of stored energy of a small-capacity secondary battery, and thus advantageous for a small set device, in particular.

### <Embodiment 2>

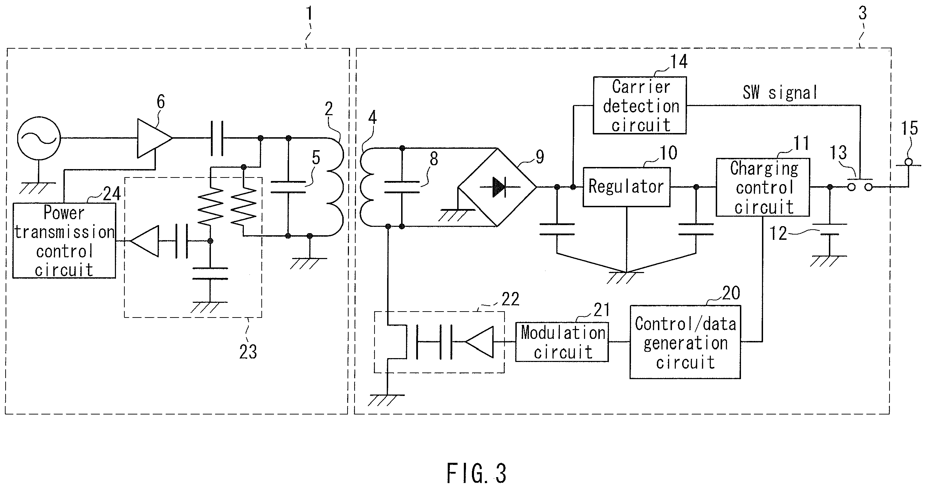

A contactless charging system of Embodiment 2 will be described with reference to the block diagram shown in FIG. 3. The basic configuration of this system is similar to that of Embodiment 1, where like components are denoted by the same reference characters, and repetition of description is omitted.

This embodiment is characterized in that the power receiving module 3 is provided with a charged state detection section that detects whether or not the secondary battery 12 is fully charged and outputs a charge detection signal and a transmitter section that transmits data including the charge detection signal. In FIG. 3, the charged state detection section is configured as part of the function of a control/data generation circuit 20. More specifically, the control/data generation circuit 20 generates the charge detection signal based on control data supplied from the charging control circuit 11, and supplies the signal to a modulation circuit 21. The transmitter section, which is constituted by the modulation circuit 21 and a load modulation section 22, transmits data including the charge detection signal supplied from the control/data generation circuit 20 via the power receiving coil 4.

Meanwhile, the power transmission module 1 is provided with a receiver section 23 that receives transmitted data from the transmitter section (21, 22) of the power receiving module 3. The power transmission control circuit 24 has a function of controlling the coil driver 6 based on the charge detection signal received by the receiver section 23. More specifically, the power transmission control circuit 24 switches the level of the power transmission carrier of high-frequency power supplied by the coil driver 6 between a normal power transmission level and a reduced level lower than the normal power transmission level. This switching is performed based on the charge detection signal received by the receiver section 23, where the level of the power transmission carrier is controlled to the normal power transmission level when the fully charged state is not attained, and to the reduced level when the fully charged state is attained.

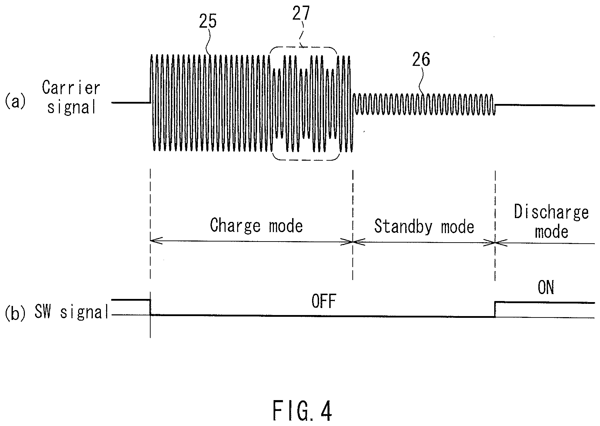

The above control operation will be described with reference to FIG. 4. FIG. 4 shows correspondences among the waveform of the carrier signal (a) of high-frequency power in the power receiving coil 4, the waveform of the SW signal (b) output by the carrier detection circuit 14, and the time periods of the charge mode, a standby mode, and the discharge mode. In the carrier signal (a), there appear a transmission-time carrier waveform 25 indicating the carrier of the normal power transmission level and a reduced carrier waveform 26 indicating the carrier of the reduced level.

The time period when the transmission-time carrier waveform 25 is present in the carrier signal (a) corresponds to the charge mode, and the time period when the reduced carrier waveform 26 is present corresponds to the standby mode. The time period when no carrier waveform is present corresponds to the discharge mode. A charge detection signal 27 indicating attainment of full charge appears in a tail portion of the transmission-time carrier waveform 25 in the carrier signal (a). The charge detection signal 27 is one transmitted from the power receiving module 3 to the power transmission module 1 by load modulation. The power transmission control circuit 24 switches the power transmission carrier from the normal power transmission level to the reduced level by receiving the charge detection signal 27, whereby the reduced carrier waveform 26 is generated.

The SW signal (b) is switched according to the waveform of the carrier signal (a): it has a waveform of being OFF during the time period when the transmission-time carrier waveform 25 or the reduced carrier waveform 26 is present (charge mode, standby mode) and ON during the time period when no carrier waveform is present (discharge mode).

As described above, as in Embodiment 1, the carrier detection circuit 14 controls the output switch 13 with the ON/OFF of the SW signal, and constitutes the switching control section together with the output switch 13.

More specifically, the output switch 13 is controlled to be OFF with the SW signal being OFF, to maintain the power shutdown state. At the same time, the charge mode or the standby mode is established according to the state of the carrier signal (a). In the charge mode, charging of the secondary battery 12 is performed with the carrier of the normal power transmission level. In the standby mode, no charging is performed since the transmitted power from the power transmission module 1 is reduced to the reduced level. By contrast, the output switch 13 is turned ON with the ON state of the SW signal, and the state is controlled to the power supply state (discharge mode).

As described above, as long as the presence of a carrier is detected by the carrier detection circuit 14, the output switch 13 will not be switched to ON. There will be no charging once full charge is attained, but since the carrier of the reduced level is detected, the mode moves to the standby mode with no switching of the output switch 13 to ON. Therefore, a function of preventing automatic switching to the normal operation as long as the power receiving module 3 is receiving a carrier is obtained.

Accordingly, in this embodiment, also, control according to the detection result on whether or not the power receiving module 3 is loaded in the power receiving position is performed. Therefore, in a situation where the power receiving module 3 is loaded in the power receiving position, an occurrence of permitting discharge even though the set device is not put to normal use is avoided. Moreover, once the fully charged state is attained, the mode moves to the standby mode, whereby power consumption can be reduced.

### <Embodiment 3>

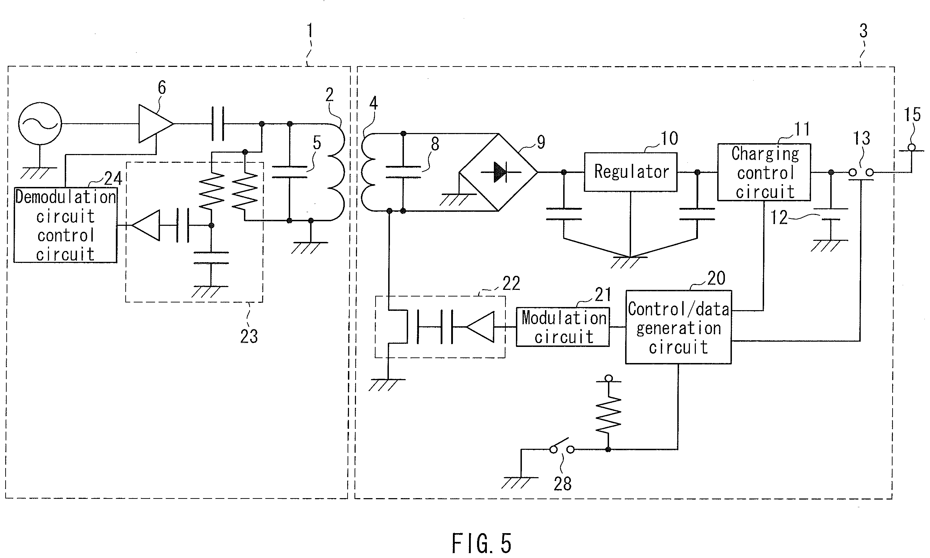

A contactless charging system of Embodiment 3 will be described with reference to the block diagram shown in FIG. 5. The basic configuration of this system is similar to that of Embodiment 2, where like components are denoted by the same reference characters, and repetition of description is omitted.

This embodiment is characterized in having a proximity switch 28 in place of the carrier detection circuit 14 in the power receiving module 3 in Embodiment 2. The proximity switch 28 constitutes the loading detection section for detecting the loaded state of the power receiving module 3 with respect to the power transmission module 1.

More specifically, the proximity switch 28 switches to ON or OFF according to whether or not the power receiving module 3 is loaded in the predetermined power receiving position with respect to the power transmission module 1. It is herein assumed that the ON state corresponds to the loaded state in the power receiving position. A voltage corresponding to the ON/OFF of the proximity switch 28 is supplied to the control/data generation circuit 20. The control/data generation circuit 20 generates the SW signal by associating the ON state of the proximity switch 28 with a loading detection signal (signal indicating detection of the loaded state of the power receiving module 3 in the power receiving position) to control the output switch 13.

The ON/OFF of the proximity switch 28 is switched by a switching action section provided in the power transmission module 1. More specifically, switching of the proximity switch 28 is performed by the action of the switching action section according to the loading/unloading of the power receiving module 3 on/from the power transmission module 1. As the proximity switch 28, a reed switch controlled in response to magnetic force can be used, for example. In this case, as the switching action section, a magnet may be placed in the power transmission module 1 next to the power receiving position of the power receiving module 3. Alternatively, a mechanical reed switch may be used as the proximity switch 28. In this case, a pressing member for switching the ON/OFF of the mechanical reed switch may be provided in the power transmission module 1. Otherwise, the proximity switch 28 may be configured of a combination of a light source and a photosensor.

The loading detection signal corresponds to the state where a carrier waveform is present in the carrier signal in Embodiment 2. Therefore, the SW signal output by the control/data generation circuit 20 is OFF when the loading detection signal is being output and ON when this signal is not supplied. That is, as in Embodiment 2, the OFF state of the SW signal corresponds to the state where the power receiving module 3 is loaded on the power transmission module 1 (charger), and the ON state of the SW signal corresponds to the state where the power receiving module 3 is not loaded on the power transmission module 1.

In this embodiment, however, the way of the control of the coil driver 6 by the power transmission control circuit 24 based on the charge detection signal received by the receiver section 23 is different from that in Embodiment 2. That is, the power transmission control circuit 24 performs switching between the state where the carrier of high-frequency power of the normal power transmission level is supplied from the coil driver 6 and the state where the output of the carrier of high-frequency power is stopped. This switching is performed so that the carrier of the normal power transmission level is output when the charge detection signal does not indicate the fully charged state and the output of the carrier is stopped when it indicates the fully charged state.

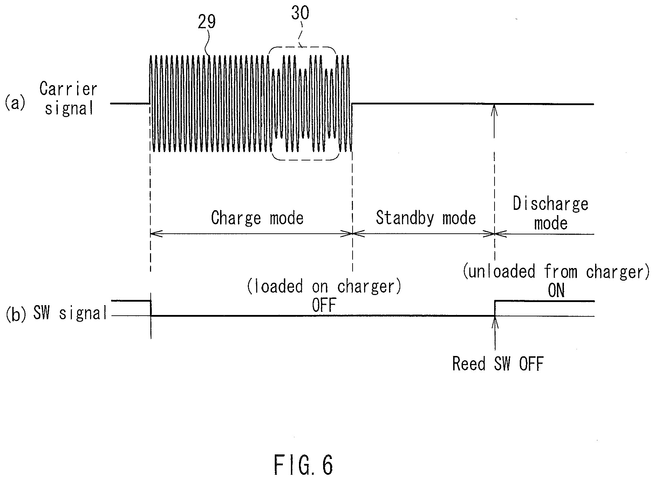

The control operation in this embodiment will be described with reference to FIG. 6. FIG. 6 shows correspondences among the waveform of the carrier signal (a), the waveform of the SW signal (b) output by the control/data generation circuit 20, and the time periods of the charge mode, the standby mode, and the discharge mode.

The time period when a transmission-time carrier waveform 29 is present in the carrier signal (a) corresponds to the charge mode. As in Embodiment 2, a charge detection signal 30 indicating attainment of full charge is included in a tail portion of the transmission-time carrier waveform 29. The power transmission control circuit 24 stops the output of the power transmission carrier of high-frequency power by receiving the charge detection signal 30. Once the output of the power transmission carrier is stopped, the transmission-time carrier waveform 29 disappears from the waveform of the carrier signal (a). The time period when the SW signal (b) is OFF and the transmission-time carrier waveform 29 is absent corresponds to the standby mode.

As described earlier, the OFF period of the SW signal (b) occurs with the output of the loading detection signal from the proximity switch 28. Therefore, during the OFF period of the SW signal (b), the power shutdown state is maintained irrespective of the state of the carrier signal (a). At the same time, as described above, the charge mode or the standby mode is established according to the state of the carrier signal (a). During the ON period of the SW signal (b), the output switch 13 is turned ON, and the state is controlled to the power supply state (discharge mode).

In the charge mode, the power shutdown state is maintained, and charging of the secondary battery 12 with the carrier of the normal power transmission level is performed. In the standby mode, while the transmission-time carrier waveform 29 disappears from the waveform of the carrier signal (a), the SW signal (b) is OFF with the ON output of the proximity switch 28. Therefore, although transmission of the carrier from the power transmission module 1 is stopped, the power shutdown state is maintained.

As described above, even though the power transmission carrier is stopped upon attainment of full charge, the loading detection signal is generated from the proximity switch 28 when the power receiving module 3 is kept loaded on the power transmission module 1, and the mode moves to the standby mode. By this, a function of preventing automatic switching to the normal operation even though the output of the power transmission carrier is stopped is obtained. Therefore, an occurrence of permitting discharge even though the set device is not put to normal use is avoided. Moreover, once the fully charged state is attained, the mode moves to the standby mode, whereby power consumption can be reduced.

In FIG. 5, the configuration is made so that the output of the proximity switch 28 controls the ON/OFF of the output switch 13 via the control/data generation circuit 20. Alternatively, the output switch 13 may be formed of the proximity switch 28, and the proximity switch 28 may be made to also function as the switching control section. In other words, a configuration where the proximity switch 28 as the loading detection section is integrated with the output switch 13 as the switching control section is possible.

The contactless charging system according to the present invention, in which the power shutdown state and the power supply state are switched to each other according to the loaded state of the power receiving module on the power transmission module, is effective for preventing waste of stored energy of a small-capacity secondary battery and thus useful for small electrical devices such as cellular phones and hearing aids.

### Description of Reference Numerals

- 1: Power transmission module
- 2: Power transmission coil
- 3: Power receiving module
- 4: Power receiving coil
- 5, 8: Resonant capacitor
- 6: Coil driver
- 7, 24: Power transmission control circuit
- 9: Rectifying circuit
- 10: Regulator
- 11: Charging control circuit
- 12: Secondary battery
- 13: Output switch
- 14: Carrier detection circuit
- 15: Power source section
- 16: Carrier waveform
- 20: Control/data generation circuit
- 21: Modulation circuit
- 22: Load modulation section
- 23: Receiver section
- 25, 29: transmission-time carrier waveform
- 26: Reduced carrier waveform
- 27, 30: Charge detection signal
- 28: Proximity switch

## Claims

1. A contactless charging system comprising:
a power transmission module (1) having a power transmission coil (2) for transmitting high-frequency power; and
a power receiving module (3) having a power receiving coil (4) that receives the high-frequency power through electromagnetic induction and a secondary battery (12) charged with DC power obtained by rectifying the received power,
wherein the power receiving module (3) includes a switching control section (13, 14, 28) that performs switching between different modes of the contactless charging system, whereby the modes are
a charge mode, where charging of the secondary battery (12) is performed and discharging of the secondary battery (12) via a power source section (15) of the contactless charging system is stopped,
a standby mode, where no charging of the secondary battery (12) is performed and discharging of the secondary battery (12) via the power source section (15) of the contactless charging system is stopped, and
a discharge mode, where no charging of the secondary battery (12) is performed and discharging of the secondary battery (12) via the power source section (15) of the contactless charging system is permitted,
whereby the switching control section (13, 14, 28) comprises either a carrier detection circuit (14) or a loading detection section (28), both controlling a switch (13) either connecting the secondary battery (12) to the power source section (15) or disconnecting the secondary battery (12) from the power source section (15),
the carrier detection circuit (14) detecting the presence or absence of a carrier of high-frequency power in the power receiving coil (4) and outputting a SW signal controlling the switch (13) to disconnect the secondary battery (12) from the power source section (15) in the presence of a carrier of high-frequency power in the power receiving coil (4) and connecting the secondary battery (12) to the power source section (15) in the absence of a carrier of high-frequency power in the power receiving coil (4),
and
the loading detection section (28) detecting a state where the power receiving module (3) is loaded in a predetermined power receiving position with respect to the power transmission module (1) and outputting a loading detection signal to control the switch (13) to disconnect the secondary battery (12) from the power source section (15) when the power receiving module (3) is loaded in the predetermined power receiving position with respect to the power transmission module (1) and to connect the secondary battery (12) with the power source section (15) otherwise, and
wherein the switching control section (13, 14, 28) switches to the charge mode, when the level of the power receiving carrier indicates a normal power transmission level and either the SW signal controls the switch (13) to disconnect the secondary battery (12) from the power source section (15) or the loading detection signal indicates a state where the power receiving module is loaded in the predetermined power receiving position with respect to the power transmission module (1),
to the standby mode, when the SW signal controls the switch (13) to disconnect the secondary battery (12) from the power source section (15) and the level of the power receiving carrier indicates a reduced level, or when loading detection signal indicates a state where the power receiving module is loaded in the predetermined power receiving position with respect to the power transmission module (1) and the level of the power receiving carrier indicates a power transmission stop level, and
to the discharge mode, when the SW signal controls the switch (13) to connect the secondary battery (12) to the power source section (15) or the loading detection signal indicates a state where the power receiving module is not loaded in the predetermined power receiving position with respect to the power transmission module (1).

2. The contactless charging system of claim 1, wherein the power receiving module includes (3) a transmitter section (21, 22) that transmits data including a charge detection signal output by a charged state detection section (20),
the power transmission module (1) includes a receiver section (23) that receives transmitted data from the transmitter section (21, 22) of the power receiving module (3) and a power transmission control circuit (24) that switches the level of a power transmission carrier of the high-frequency power supplied to the power transmission coil (2) between a normal power transmission level and a reduced level lower than the normal power transmission level,
the power transmission control circuit (24) controls the level of the power transmission carrier to the normal power transmission level when the charge detection signal received by the receiver section (23) indicates a state, where the secondary battery (12) is not in the fully charged state, and to the reduced level when it indicates a state, where the secondary battery is in the fully charged state.

3. The contactless charging system of claim 1, wherein the loading detection section is comprised of a proximity switch (28),
the power transmission module (1) includes a switching action section placed next to the power receiving position of the power receiving module (3), and
the proximity switch (28) is switched by the switching action section in a state where the power receiving module (3) is placed in the power receiving position to generate the loading detection signal.

## Patentansprüche

1. Kontaktloses Ladesystem, das aufweist:
ein Energiesendemodul (1) mit einer Energiesendespule (2) zum Senden hochfrequenter Energie und
ein Energieempfangsmodul (3) mit einer Energieempfangsspule (4), die die hochfrequente Energie mittels elektromagnetischer Induktion empfängt, und einen Akkumulator (12), der mit dem durch gleichrichten der empfangenen Energie erhaltenen Gleichstrom aufgeladen wird,
wobei das Energieempfangsmodul (3) eine Umschaltsteuerungssektion (13, 14, 28) aufweist, die zum Umschalten zwischen verschiedenen Moden des kontaktlosen Ladesystems ausgebildet ist, wobei es sich bei den Moden um
einen Lademodus, bei dem der Akkumulator (12) geladen und ein Entladen des Akkumulators (12) über eine Strombezugssektion (15) des kontaktlosen Ladesystems unterbunden wird,
einen Bereitschaftsmodus, bei dem der Akkumulator (12) nicht geladen und ein Entladen des Akkumulators (12) über die Strombezugssektion (15) des kontaktlosen Ladesystems unterbunden wird, und
einen Entlademodus, bei dem der Akkumulator (12) nicht geladen wird und ein Entladen des Akkumulators (12) über die Strombezugssektion (15) des kontaktlosen Ladesystems möglich ist,
handelt,
wobei die Umschaltsteuerungssektion (13, 14, 28) entweder eine Trägersignalerfassungsschaltung (14) oder eine Ladevorgangerfassungssektion (28) aufweist, die beide einen Schalter (13) so ansteuern, dass dieser entweder den Akkumulator (12) mit der Strombezugssektion (15) verbindet oder den Akkumulator (12) von der Strombezugssektion (15) trennt, wobei
die Trägersignalerfassungsschaltung (14) das Vorhandensein oder Nichtvorhandensein eines Trägersignals hochfrequenter Energie in der Energieempfangsspule (4) erfasst und ein SW-Signal ausgibt, das den Schalter (13) so steuert, dass der Akkumulator (12) von der Strombezugssektion (15) getrennt wird, wenn in der Energieempfangsspule (4) ein Trägersignal hochfrequenter Energie vorliegt, und der Akkumulator (12) mit der Strombezugssektion (15) verbunden wird, wenn in der Energieempfangsspule (4) kein Trägersignal hochfrequenter Energie vorliegt, und
die Ladevorgangerfassungssektion (28) einen Zustand erfasst, bei dem das Energieempfangsmodul (3) in einer relativ zum Energiesendemodul (1) vorgegebenen Energieempfangsposition geladen wird und ein Ladevorgangserfassungssignal ausgibt, um den Schalter (13) so zu steuern, dass der Akkumulator (12) von der Strombezugssektion (15) getrennt wird, wenn das Energieempfangsmodul (3) in der relativ zum Energiesendemodul (1) vorgegebenen Energieempfangsposition geladen wird, und der Akkumulator (12) ansonsten mit der Strombezugssektion (15) verbunden wird, und
wobei die Umschaltsteuerungssektion (13, 14, 28)
in den Lademodus schaltet, wenn der Energieempfangsträgersignalpegel ein normales Energiesendeniveau anzeigt und entweder das SW-Signal den Schalter (13) so steuert, dass der Akkumulator (12) von der Strombezugssektion (15) getrennt wird, oder das Ladevorgangserfassungssignal einen Zustand anzeigt, bei dem das Energieempfangsmodul in der relativ zum Energiesendemodul (1) vorgegebenen Energieempfangsposition geladen wird,
in den Bereitschaftsmodus schaltet, wenn das SW-Signal den Schalter (13) so steuert, dass der Akkumulator (12) von der Strombezugssektion (15) getrennt wird, und der Energieempfangsträgersignalpegel ein verringertes Niveau anzeigt, oder wenn das Ladevorgangserfassungssignal einen Zustand anzeigt, bei dem das Energieempfangsmodul in der relativ zum Energiesendemodul (1) vorgegebenen Energieempfangsposition geladen wird, und der Energieempfangsträgersignalpegel ein Energiesendeunterbrechungsniveau anzeigt, und
in den Entlademodus schaltet, wenn das SW-Signal den Schalter (13) so steuert, dass der Akkumulator (12) mit der Strombezugssektion (15) verbunden wird, oder das Ladevorgangserfassungssignal einen Zustand anzeigt, bei dem das Energieempfangsmodul nicht in der relativ zum Energiesendemodul (1) vorgegebenen Energieempfangsposition geladen wird.

2. Kontaktloses Ladesystem nach Anspruch 1, wobei das Energieempfangsmodul (3) eine Sendesektion (21, 22) aufweist, die Daten einschließlich eines von einer Ladungszustandserfassungssektion (20) ausgegebenen Ladungszustandserfassungssignals sendet,
das Energiesendemodul (1) eine Empfängersektion (23), die von der Sendesektion (21, 22) des Energieempfangsmoduls (3) gesendete Daten empfängt, und eine Energiesendesteuerungsschaltung (24) aufweist, die den Energiesendeträgersignalpegel der in die Energiesendespule (2) gespeisten hochfrequenten Energie zwischen einem normalen Energiesendeniveau und einem verringerten Niveau umschaltet, das niedriger als das normale Energiesendeniveau ist,
die Energiesendesteuerungsschaltung (24) den Energiesendeträgersignalpegel auf das normale Energiesendeniveau regelt, wenn das von der Empfängersektion (23) empfangene Ladungszustandserfassungssignal einen Zustand mit nicht vollständig geladenem Akkumulator (12) anzeigt, und auf das verringerte Niveau regelt, wenn es einen Zustand mit vollständig geladenem Akkumulator anzeigt.

3. Kontaktloses Ladesystem nach Anspruch 1, wobei die Ladevorgangerfassungssektion von einem Näherungsschalter (28) gebildet wird, das Energiesendemodul (1) eine neben der Energieempfangsposition des Energieempfangsmoduls (3) angeordnete Schaltvorgangssektion aufweist, und der Näherungsschalter (28) von der Schaltvorgangssektion zum Erzeugen des Ladevorgangserfassungssignals umgeschaltet wird, wenn das Energieempfangsmodul (3) in der Energieempfangsposition angeordnet wird.

## Revendications

1. Système de charge sans contact comprenant :
un module d'émission d'énergie (1) ayant une bobine d'émission d'énergie (2) pour émettre de l'énergie à haute fréquence ; et
un module de réception d'énergie (3) ayant une bobine de réception d'énergie (4) qui reçoit l'énergie à haute fréquence par induction électromagnétique et une batterie secondaire (12) chargée avec de l'énergie en courant continu obtenue en redressant l'énergie reçue, dans lequel le module de réception d'énergie (3) inclut une section de commande de commutation (13, 14, 28) qui exécute une commutation entre différents modes du système de charge sans contact, en sorte que les modes sont
un mode de charge, où la charge de la batterie secondaire (12) est exécutée et la décharge de la batterie secondaire (12) via une section de source d'énergie (15) du système de charge sans contact est arrêtée,
un mode d'attente, où aucune charge de la batterie secondaire (12) n'est exécutée et la décharge de la batterie secondaire (12) via la section de source d'énergie (15) du système de charge sans contact est arrêtée, et
un mode de décharge, où aucune charge de la batterie secondaire (12) n'est exécutée et la décharge la batterie secondaire (12) via la section de source d'énergie (15) du système de charge sans contact est permise,
en sorte que la section de commande de commutation (13, 14, 28) comprend soit un circuit de détection de porteuse (14) soit une section de détection de charge (28), toutes deux commandant un commutateur (13) soit connectant la batterie secondaire (12) à la section de source d'énergie (15) soit déconnectant la batterie secondaire (12) de la section de source d'énergie (15),
le circuit de détection de porteuse (14) détectant la présence ou l'absence d'une porteuse d'énergie à haute fréquence dans la bobine de réception d'énergie (4) et délivrant en sortie un signal SW commandant le commutateur (13) pour déconnecter la batterie secondaire (12) de la section de source d'énergie (15) en présence d'une porteuse d'énergie à haute fréquence dans la bobine de réception d'énergie (4) et pour connecter la batterie secondaire (12) à la section de source d'énergie (15) en l'absence d'une porteuse d'énergie à haute fréquence dans la bobine de réception d'énergie (4), et
la section de détection de charge (28) détectant un état où le module de réception d'énergie (3) est chargé dans une position de réception d'énergie prédéterminée par rapport au module d'émission d'énergie (1) et délivrant en sortie un signal de détection de charge pour commander le commutateur (13) pour déconnecter la batterie secondaire (12) de la section de source d'énergie (15) lorsque le module de réception d'énergie (3) est chargé dans la position de réception d'énergie prédéterminée par rapport au module d'émission d'énergie (1) et sinon pour connecter la batterie secondaire (12) à la section de source d'énergie (15), et
dans lequel la section de commande de commutation (13, 14, 28) commute vers le mode de charge, lorsque le niveau de la porteuse de réception d'énergie indique un niveau d'émission d'énergie normal et soit le signal SW commande le commutateur (13) pour déconnecter la batterie secondaire (12) de la section de source d'énergie (15) soit le signal de détection de charge indique un état où le module de réception d'énergie est chargé dans la position de réception d'énergie prédéterminée par rapport au module d'émission d'énergie (1),
vers le mode d'attente, lorsque le signal SW commande le commutateur (13) pour déconnecter la batterie secondaire (12) de la section de source d'énergie (15) et le niveau de la porteuse de réception d'énergie indique un niveau réduit, ou lorsque le signal de détection de charge indique un état où le module de réception d'énergie est chargé dans la position de réception d'énergie prédéterminée par rapport au module d'émission d'énergie (1) et le niveau de la porteuse de réception d'énergie indique un niveau d'arrêt d'émission d'énergie, et
vers le mode de décharge, lorsque le signal SW commande le commutateur (13) pour connecter la batterie secondaire (12) à la section de source d'énergie (15) ou le signal de détection de charge indique un état où le module de réception d'énergie n'est pas chargé dans la position de réception d'énergie prédéterminée par rapport au module d'émission d'énergie (1).

2. Système de charge sans contact selon la revendication 1, dans lequel le module de réception d'énergie (3) inclut une section émettrice (21, 22) qui émet des données incluant un signal de détection de charge délivré en sortie par une section de détection d'état chargé (20),
le module d'émission d'énergie (1) inclut une section réceptrice (23) qui reçoit des données émises à partir de la section émettrice (21, 22) du module de réception d'énergie (3) et un circuit de commande d'émission d'énergie (24) qui commute le niveau d'une porteuse d'émission d'énergie de l'énergie à haute fréquence fournie à la bobine d'émission d'énergie (2) entre un niveau d'émission d'énergie normal et un niveau réduit inférieur au niveau d'émission d'énergie normal,
le circuit de commande d'émission d'énergie (24) commande le niveau de la porteuse d'émission d'énergie jusqu'au niveau d'émission d'énergie normal lorsque le signal de détection de charge reçu par la section réceptrice (23) indique un état où la batterie secondaire (12) n'est pas dans l'état entièrement chargé, et jusqu'au niveau réduit lorsqu'il indique un état où la batterie secondaire est à l'état entièrement chargé.

3. Système de charge sans contact selon la revendication 1, dans lequel la section de détection de charge est constituée d'un commutateur de proximité (28),
le module d'émission d'énergie (1) inclut une section d'action de commutation placée à côté de la position de réception d'énergie du module de réception d'énergie (3), et le commutateur de proximité (28) est commuté par la section d'action de commutation dans un état où le module de réception d'énergie (3) est placé dans la position de réception d'énergie pour générer le signal de détection de charge.
